# EUROPÄISCHE PATENTSCHRIFT

(11) **EP 0 915 326 B1**
(45) Veröffentlichungstag und Bekanntmachung des Hinweises auf die Patenterteilung: **30.01.2002**
(21) Anmeldenummer: 97117602.9
(22) Anmeldetag: 10.10.1997
(51) Int. Cl.: G01L 19/14, G01L 9/00

(54) **Verfahren zur Herstellung eines Druckmessumformers und Druckmessumformer**
Method of manufacturing a pressure transducer and pressure transducer
Procédé de fabrication d'un capteur de pression et capteur de pression

(43) Veröffentlichungstag der Anmeldung: 12.05.1999
(73) Patentinhaber: WIKA ALEXANDER WIEGAND GmbH & CO., D-63911 Klingenberg (DE)
(72) Erfinder: Klug, Arno, 63820 Elsenfeld (DE); Ciba, Joachim, Dipl.-Ing., 63927 Bürgstadt (DE)
(74) Vertreter: Grams, Klaus Dieter, Dipl.-Ing.

(56) Entgegenhaltungen:
- EP-A- 0 284 633
- EP-A- 0 397 392
- EP-A- 0 651 240
- EP-A- 0 660 482
- US-A- 4 939 497

## Beschreibung

Die Erfindung bezieht sich auf ein Verfahren zur Herstellung eines Druckmeßumformers gemäß dem Oberbegriff von Patentanspruch 1 sowie einen Druckmeßumformer gemäß dem Oberbegriff von Patentanspruch 5.

Ein Druckmeßumformer mit den Merkmalen des Oberbegriffs von Patentanspruch 5 ist bekannt (Dokument US-A-4 939 497). Der bekannte Druckmeßumformer dient dazu, an nachgeschaltete Anzeige-, Steuer- oder Regeleinrichtungen ein elektrisches Ausgangssignal in Form einer Ausgangssignalspannung oder eines Ausgangssignalstromes zu liefern, das ein Maß für den gemessenen Druck ist. Zu diesem Zweck weist der Druckmeßumformer einen Drucksensor auf, der als Drucksensor in Dünnfilmtechnik mit Dünnfilmdehnungsmeßstreifen ausgebildet ist. Der Drucksensor wird mit elektrischer Hilfsenergie gespeist, indem an ihn über eine Schaltungsanordnung eine elektrische Spannung angelegt wird, und er wird direkt oder indirekt dem Druck eines Meßstoffs ausgesetzt. In Abhängigkeit vom wirkenden Druck ändert sich das elektrische Ausgangssignal des Drucksensors, das der Schaltungsanordnung zugeführt wird. Die Schaltungsanordnung ist elektrisch mit einer Anschlußbaugruppe verbunden, die als Kabeldurchführung ausgebildet ist. Alternativ kann die Anschlußbaugruppe einen Gerätestecker aufweisen, an den ein Signalkabel zur Weiterleitung des Ausgangssignals des Druckmeßumformers ansteckbar ist.

Der bekannte Druckmeßumformer weist einen Druckanschluß auf, bei dem es sich um ein mit einem Außengewinde versehenes Bauteil handelt, mittels dessen der Druckmeßumformer direkt oder mittels eines Adapters an das den Meßstoff führende System anschließbar ist. Der Druckanschluß dient zugleich als Träger für den Drucksensor, der am Druckanschluß befestigt ist. Ein rohrförmiges Gehäuse weist einen ersten und einen zweiten Endabschnitt auf. Der erste Endabschnitt ist mit dem Druckanschluß fest verbunden. Im Inneren des Gehäuses sind die Schaltungsanordnung und der Drucksensors geschützt angeordnet.

An dem vom Druckanschluß abgewandten, zweiten Endabschnitt des Gehäuses ist bei dem bekannten Druckmeßumformer die Anschlußbaugruppe unter Zwischenfügung eines Dichtringes eingesetzt.

Die Verbindung zwischen der Anschlußbaugruppe und dem zweiten Endabschnitt des Gehäuses ist durch Umbördeln des zweiten Endabschnitts hergestellt.

Durch das Dokument EP-A-0 651 240, insbesondere dessen Figur 2, ist ein Druckmeßumformer bekannt, der ebenfalls die Merkmale des Oberbegriffs von Anspruch 5 aufweist. Bei diesem bekannten Druckmeßumformer ist nicht nur der zweite Endabschnitt des Gehäuses mit der Anschlußbaugruppe durch Umbördeln verbunden, sondern ist auch der erste Endabschnitt des Gehäuses mit dem Druckanschluß durch Umbördeln verbunden. Bei der Ausführungsform des. Druckmeßumformers gemäß Figur 3 des Dokuments EP-A-0 651 240 ist das Gehäuse an der Anschlußbaugruppe einstückig angeformt und an seinem ersten Endabschnitt mittels einer Rastvorrichtung mit dem Druckanschluß verrastet.

Durch das Dokument EP-A-0 284 633, insbesondere dessen Figur 1, ist ein Druckmeßumformer bekannt, der ebenfalls die Merkmale des Oberbegriffs von Anspruch 5 aufweist.

Das Dokument EP-A-0 397 392 offenbart einen Druckmeßumformer, bei dem die Anschlußbaugruppe mit dem zweiten Endabschnitt des Gehäuses mittels einer Rastvorrichtung verbunden ist, die durch unmittelbar an der Anschlußbaugruppe und dem zweiten Endabschnitt des Gehäuses angeformte Rastvorsprünge gebildet ist.

Im Zuge der Herstellung des vorstehend erläuterten, durch das Dokument US-A-4 939 497 bekannten Druckmeßumformers werden der Druckanschluß, der Drucksensor und die Schaltungsanordnung mechanisch und elektrisch zu einem Untersystem verbunden. Das Gehäuse wird am Druckanschluß des Untersystems befestigt und die Anschlußbaugruppe wird mechanisch mit dem Gehäuse verbunden und elektrisch mit der Schaltungsanordnung kontaktiert. Obwohl dies im Dokument US-A-4 939 497 nicht ausdrücklich angegeben ist, kann davon ausgegangen werden, daß das Gehäuse am Druckanschluß des Untersystems befestigt wird, bevor die Anschlußbaugruppe elektrisch mit der Schaltungsanordnung kontaktiert und mechanisch mit dem Gehäuse verbunden wird. Dem Oberbegriff von Anspruch 1 liegt das vorstehend erläuterte Verfahren zur Herstellung eines Druckmeßumformers gemäß dem Dokument US-A-4 939 497 zugrunde.

Es sind zahlreiche verschiedene Bauarten bzw. Typen von Gerätesteckern bekannt und im Einsatz. Dies hat dazu geführt, daß von einem bestimmten Druckmeßumformer-Typ verschiedene Versionen gefertigt werden, die sich durch die Anschlußbaugruppe, insbesondere den Typ des Gerätesteckers, und die der Anschlußbaugruppe angepaßte Gehäusegestaltung unterscheiden und ansonsten gleich ausgebildet sind. Für den Hersteller des Druckmeßumformers bedeutet dies, daß er von demselben Druckmeßumformer-Typ verschiedene Versionen auf Lager halten muß, wenn Aufträge von Kunden mit kurzer Lieferzeit erfüllt werden sollen. Insbesondere die Kosten der hierfür erforderlichen umfangreichen Lagerhaltung können verringert werden, indem die Endmontage, d.h. der Zusammenbau des Untersystems aus Druckanschluß, Drucksensor und Schaltungsanordnung mit dem Gehäuse und der Anschlußbaugruppe erst nach Erhalt eines Kundenauftrages durchgeführt wird. Dies erhöht jedoch die Lieferzeit um den Zeitbedarf für die Endmontage und für die im Verlauf der Endmontage oder danach durchgeführte Funktionsprüfung und Justage.

Der Erfindung liegt die Aufgabe zugrunde, das Verfahren gemäß dem Oberbegriff von Anspruch 1 derart weiterzubilden, daß für ein und den selben Druckmeßumformer-Typ eine von mehreren verschiedenen Anschlußbaugruppen wählbar sein soll, ohne daß dies eine aufwendige Lagerhaltung oder lange Lieferzeiten zur Folge hat.

Ferner liegt der Erfindung die Aufgabe zugrunde, den Druckmeßumformer gemäß dem Oberbegriff von Anspruch 5 derart weiterzubilden, daß seine Herstellung vereinfacht ist. Insbesondere soll der zu schaffende Druckmeßumformer geeignet sein für die Herstellung nach dem erfindungsgemäßen Verfahren.

Die genannte Aufgabe wird hinsichtlich des Verfahrens durch das Verfahren gemäß Patentanspruch 1 gelöst. Gemäß dem erfindungsgemäßen Verfahren ist zusätzlich zu den Merkmalen des Oberbegriffs von Anspruch 1 vorgesehen, daß mehrere verschiedene Anschlußbaugruppen gefertigt werden und daß eine dieser verschiedenen Anschlußbaugruppen zur Verbindung mit dem Gehäuse ausgewählt wird, wobei das Gehäuse derart ausgebildet wird, daß es mit jeder der verschiedenen Anschlußbaugruppen verbindbar ist.

Das erfindungsgemäße Vorgehen ermöglicht es, zunächst eine aus dem Untersystem und dem Gehäuse bestehende Umformereinheit zu fertigen, die bereits voll funktionsfähig ist und auf einfache Weise justiert werden kann, da das Gehäuse an seinem Endabschnitt noch offen ist. Diese Umformereinheit ist gut lagerungsfähig, da sie bereits das Gehäuse aufweist, das den Drucksensor und die Schaltungsanordung umgibt. Wenn aufgrund eines Kundenauftrages feststeht, welche Bauart die Anschlußbaugruppe des Druckmeßumformers haben soll, kann die vorgefertigte und funktionsfähige Umformereinheit in vergleichsweise kurzer Zeit mit der gewählten Anschlußbaugruppe zusammengebaut werden. Weil nicht fertig montierte Druckmeßumformer in verschiedenen Versionen, d.h. mit unterschiedlichen Anschlußbaugruppen, auf Lager gehalten zu werden brauchen, ist die Lagerhaltung verringert. Weil die Endmontage lediglich den Zusammenbau der Anschlußbaugruppe mit dem Gehäuse erfordert, kann dennoch eine Lieferung innerhalb kurzer Zeit nach Eingang eines Kundenauftrages erfolgen.

In vorteilhafter Ausbildung der Erfindung kann vorgesehen sein, daß die ausgewählte Anschlußbaugruppe mit dem Gehäuse über eine Rastvorrichtung verbunden wird.

Unter Rastvorrichtung wird hier eine Verbindungsvorrichtung verstanden, bei der die beiden miteinander zu verbindenden Teile während des Verbindens relativ zueinander bewegt werden, bis ein Vorsprung an einem der beiden Teile in eine Aufnahme am anderen der beiden Teile einrastet. Realisiert sein kann eine solche Rastvorrichtung durch eine sogenannte Schnappvorrichtung, bei der der Vorsprung während des Fügens elastisch verformt wird, bis er sich in die Aufnahme ausdehnen kann und dadurch in diese einrastet. Die Rastvorrichtung kann aber auch realisiert sein durch eine Bajonettverbindungsvorrichtung, bei der ein Bajonettstift am Ende eines abgewinkelten Bajonettschlitzes bzw. einer abgewinkelten Bajonettnut einrastet und in dieser Stellung durch eine elastische Kraft gehalten wird.

Hinsichtlich des Druckmeßumformers wird die zugrundeliegende Aufgabe gelöst durch den Druckmeßumformer gemäß Anspruch 5.

Der erfindungsgemäße Druckumformer weist den Rastring auf, der mittels der Rastvorrichtung mit dem zweiten Endabschnitt des Gehäuses in Eingriff steht. Ferner ist die Überwurfmutter vorgesehen, die auf das Außengewinde am Rastring geschraubt ist und die Anschlußbaugruppe am Rastring festhält und dadurch mit dem zweiten Endabschnitt des Gehäuses verbindet. Eine Besonderheit dieser Verbindung besteht somit darin, daß sowohl ein Rastring als auch eine Überwurfmutter zur Anwendung kommen.

Sowohl das Aufrasten des Rastringes auf den zweiten Endabschnitt, als auch das Aufschrauben der Überwurfmutter auf den Rastring sind Montageschritte, die schnell und auf einfache Weise ausgeführt werden können, ohne daß hierzu ein spezielles Montagewerkzeug notwendig ist. Das Festspannen der Anschlußbaugruppe am Rastring mittels der Überwurfmutter hat den Vorteil, daß keine Modifikationen der Anschlußbaugruppe notwendig sind und herkömmliche Anschlußbaugruppen unterschiedlicher Bauart am Gehäuse befestigt werden können.

In vorteilhafter Ausbildung kann ferner vorgesehen sein, daß der Rastring auf seiner dem zylindrischen Endabschnitt zugewandten Seite und/oder der zylindrische Endabschnitt auf seiner dem Rastring zugewandten Seite eine Ausnehmung aufweist, daß im Bereich der Ausnehmung sowohl der zylindrische Endabschnitt als auch der Rastring mit einer Öffnung versehen sind und daß in der Ausnehmung eine Membran aus einem flüssigkeitsundurchlässigen und gasdurchlässigen Werkstoff angeordnet ist. Dadurch ist eine einfache und zuverlässige Belüftungsvorrichtung geschaffen.

Weitere vorteilhafte Ausgestaltungen der Erfindung sind in den abhängigen Ansprüchen gekennzeichnet.

Ausführungsbeispiele der Erfindung sind in den Zeichnungen dargestellt und werden im folgenden näher erläutert. Es zeigen:
Fig. 1 einen Längsschnitt durch eine erste Ausführungsform eines Druckmeßumformers;
Fig. 2 eine perspektivische Ansicht eines Rastringes des Druckmeßumformers gemäß Fig. 1;
Fig. 3 Elemente des Druckmeßumformers gemäß Fig. 1, die während der Herstellung desselben miteinander verbunden werden;
Fig. 4 einen Längsschnitt durch eine zweite Ausführungsform eines Druckmeßumformers; und
Fig. 5 Elemente des Druckmeßumformers gemäß Fig. 4, die während der Herstellung desselben miteinander verbunden werden.

Die erste Ausführungsform, nicht jedoch die zweite Ausführungsform stellt ein Beispiel für den erfindungsgemäßen Druckmeßumformer dar. Beide Ausführungsformen werden nach dem erfindungsgemäßen Verfahren hergestellt.

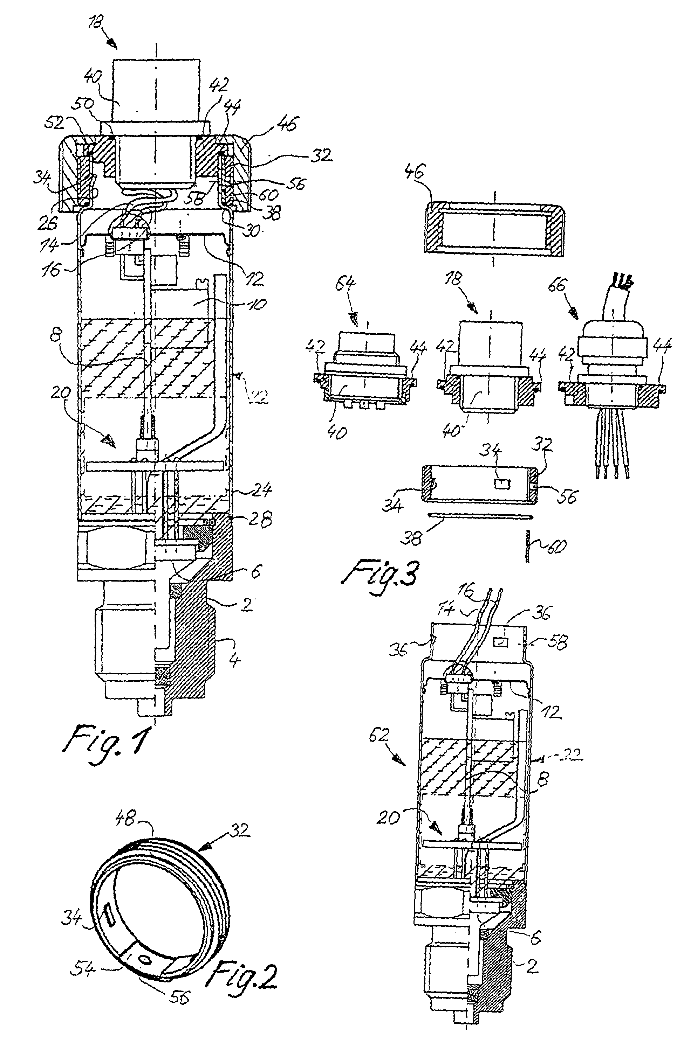

Der in Fig. 1 gezeigte Druckmeßumformer weist einen Druckanschluß 2 auf, der beispielsweise aus CrNi-Stahl besteht und mit einem Außengewinde 4 versehen ist, mittels dessen er in ein Gewindeloch eines einen Meßstoff führenden Systems derart geschraubt werden kann, daß der Druck des Meßstoffs im Inneren des Druckanschlusses 2 wirkt. Der Druckanschluß 2 trägt einen Drucksensor 6, der innerhalb des Druckanschlusses 2 derart angeordnet und befestigt ist, daß auf das Sensorelement des Drucksensors 6 der Meßstoffdruck direkt oder indirekt wirken kann. Beim dargestellten Ausführungsbeispiel ist der Drucksensor 6 als Piezosensor ausgebildet.

In Fig. 1 oberhalb des Drucksensors 6 ist eine Schaltungsanordnung 8 angeordnet, die elektrisch mit dem Drucksensor 6 verbunden ist und unter anderem einen zu Justagezwecken einstellbaren Widerstand 10 trägt. Oberhalb der Schaltungsanordnung 8 befindet sich eine Trennwand 12, die mit einer nicht dargestellten Öffnung versehen ist, durch die hindurch der Widerstand 10 erreichbar ist. Von der Trennwand 12 nach oben führen Leitungen 14 und 16, die die Schaltungsanordnung 8 mit einer Anschlußbaugruppe 18 elektrisch verbinden und über die einerseits der Schaltungsanordnung 8 elektrische Hilfsenergie zugeführt wird und andererseits das elektrische Ausgangssignal des Druckmeßumformers weitergeleitet wird.

Der Druckanschluß 2, der Drucksensor 6, die Schaltungsanordnung 8 und die Trennwand 12 des dargestellten Ausführungsbeispiels des Druckmeßumformers bilden ein Untersystem 20 und sind herkömmlich ausgebildet. Sie werden daher hier nicht ausführlicher erläutert.

Der dargestellte Druckmeßumformer umfaßt ferner ein rohrförmiges, metallisches Gehäuse 22, das beispielsweise aus CrNi-Stahl besteht. Dieses Gehäuse 22 hat einen im wesentlichen kreiszylindrischen Querschnitt und weist einen ersten, in Fig. 1 unteren Endabschnitt 24 sowie einen zweiten, in Fig. 1 oberen Endabschnitt 26 auf. Das Gehäuse 22 ist an seinem unteren Endabschnitt 24 mittels einer umlaufenden Schweißnaht 28 mit dem Druckanschluß 2 verbunden. Im Inneren des Gehäuses sind vom Druckanschluß nach oben vorstehend Elemente des Drucksensors 6, die Schaltungsanordnung 8 sowie die Trennwand 12 geschützt angeordnet.

Der obere Endabschnitt 26 ist zylindrisch geformt und weist einen kreiszylindrischen Querschnitt auf. Er hat einen geringeren Durchmesser als das übrige Gehäuse 22 und weist an seinem unteren Ende eine Schulter 30 auf, die den Übergang zwischen dem zylindrischen Endabschnitt 26 und dem übrigen Gehäuse bildet.

In Eingriff mit dem zylindrischen Endabschnitt 26 steht ein Rastring 32, der in Fig. 2 perspektivisch dargestellt ist. Dieser Rastring ist aus einem Kunststoff gefertigt und erstreckt sich in Axialrichtung des Gehäuses 22 über im wesentlichen die gleiche Länge wie der zylindrische Endabschnitt 26. Der Rastring 32 umschließt die Außenseite des zylindrischen Endabschnitts 26 und weist auf seiner Innenseite drei in Umfangsrichtung gleichmäßig verteilte, keilförmige Vorsprünge 34 auf, die in Eingriff mit zu den Vorsprüngen 34 komplementär ausgebildeten Ausnehmungen 36 im zylindrischen Endabschnitts 26 stehen. Jede der Ausnehmungen 36 kann als Öffnung im zylindrischen Endabschnitt 26 ausgebildet sein oder dadurch gebildet sein, daß ein zungenförmiger Abschnitt des Endabschnitts 26 radial nach innen gebogen ist, wie dies links oben in Fig. 1 gezeigt ist. Die Vorsprünge 34 und die Ausnehmungen 36 bilden gemeinsam eine Rastvorrichtung. Zwischen der Schulter 30 und dem Rastring 32 ist ein Dichtring 38 angeordnet.

Der Rastring 32 wird dadurch mit dem zylindrischen Endabschnitt 26 verbunden, daß er von oben (in Fig. 1) auf den zylindrischen Endabschnitt geschoben wird. Dabei gleiten die keilförmigen Vorsprünge 34 auf den Endabschnitt 26, wobei sie elastisch verformt werden, bis sie in die Ausnehmungen 36 eintreten und in diese einrasten. Diese Art der Rastverbindung stellt eine Schnappverbindung dar. Der Rastring 32 ist im dargestellten Ausführungsbeispiel daher als Schnappring ausgebildet.

Die Anschlußbaugruppe 18 umfaßt einen Gerätestecker 40 sowie einen Adapterring 42, an dem ein.Ringflansch 44 angeformt ist. Der Gerätestecker 40 und der Adapterring 42 sind auf beliebige Art miteinander fest verbunden, beispielsweise miteinander verschraubt oder verklebt. Der Adapterring 42 der Anschlußbaugruppe 18 ist in den zylindrischen Endabschnitt 26 des Gehäuses 22 derart eingesteckt, daß der Ringflansch 44 auf dem oberen Rand des Endabschnitts 26 und dem oberen Ende des Rastringes 32 aufsitzt. Die Anschlußbaugruppe 18 wird in dieser Lage festgehalten durch eine Überwurfmutter 46, die auf den Rastring 32 geschraubt ist, der auf seiner Außenseite ein Außengewinde 48 aufweist. Zwischen dem Gerätestecker 40 und dem Adapterring 42 ist ein Dichtring 50 angeordnet, und zwischen dem Ringflansch 44 und dem oberen Rand des zylindrischen Endabschnitts 26 ist ein Dichtring 52 angeordnet. Die Leitungen 14 und 16 sind beispielsweise durch Löten elektrisch kontaktiert mit dem Gerätestecker 40.

Der Rastring 32 weist auf seiner Innenseite eine Ausnehmung 54 auf (siehe Fig. 2). Im Bereich dieser Ausnehmung 54 ist der Rastring 32 mit einer Öffnung 56 versehen. Auch der zylindrische Endabschnitt 26 weist im Bereich der Ausnehmung 54 eine Öffnung 58 auf. Eine in ihrem Umriß der Ausnehmung 54 angepaßte Membran 60 aus einem flüssigkeitsundurchlässigen und gasdurchlässigen Werkstoff ist in der Ausnehmung 54 angeordnet und somit zwischen der Innenseite des Rastringes 32 und der Außenseite des zylindrischen Endabschnitts 26 eingeschlossen. Dadurch ist eine Belüftungsvorrichtung gebildet. Durch die Öffnung 58, die Membran 60, die Öffnung 56 und zwischen den Gewindegängen des Außengewindes 48 und des Innengewindes der Überwurfmutter 46 hindurch kann ein Gasaustausch zwischen dem Inneren des Druckmeßumformers und der umgebenden Atmosphäre erfolgen, so daß im Inneren des Druckmeßumformers Umgebungsdruck herrscht. Die Membran 60 verhindert jedoch das Eindringen von Flüssigkeit in das Innere des Druckmeßumformers.

Die Herstellung des vorstehend anhand der Figuren 1 und 2 erläuterten Druckmeßumformers wird im folgenden anhand der Fig. 3 erläutert.

Es wird zunächst das Untersystem 20 aus dem Druckanschluß 2, dem Drucksensor 6, der Schaltungsanordnung 8 und der Trennwand 12 hergestellt. Außerdem wird das Gehäuse 22 gefertigt, bei dem es sich um ein einstückiges Bauteil von vergleichsweise einfacher Gestaltung handelt, so daß seine Fertigung vergleichsweise einfach durchgeführt werden kann und insbesondere nicht das Zusammenfügen von mehreren Bauteilen beispielsweise durch Schweißen erfordert. Das Gehäuse 22 wird auf das Untersystem 20 geschoben und dann an seinem unteren Endabschnitt 24 mittels der Schweißnaht 28 fest mit dem Druckanschluß 2 verbunden. Dadurch entsteht die in Fig. 3 unten gezeigte Umformereinheit 62, die bereits voll funktionsfähig ist. Wie sich noch aus der folgenden Beschreibung ergeben wird, erfordert der Weiterbau der Umformereinheit zum fertigen Druckmeßformer - mit Ausnahme der elektrischen Kontaktierung der Leitungen 14 und 16 - lediglich einen Schraubvorgang und einen Rastvorgang und insbesondere keine Bearbeitung, bei der Wärme einwirkt oder Teile plastisch verformt werden. Daher kann und wird die Umformereinheit 62 als solche vorzugsweise vor der Endmontage des Druckmeßumformers einer Funktionsprüfung unterzogen und justiert. Da das Gehäuse 22 zu diesem Zeitpunkt oben offen ist, kann die Justage auf einfache Weise durchgeführt werden.

Auf den zylindrischen Endabschnitt 26 der geprüften und justierten Umformereinheit 62 wird dann der Rastring 32 geschoben, bis die Vorsprünge 34 in die Ausnehmungen 36 eingerastet sind. Dabei wird der Dichtring 38 zwischen den Rastring 32 und die Schulter 30 eingefügt und wird die Membran 60 in die Ausnehmung 54 eingesetzt. Im Anschluß daran wird die Anschlußbaugruppe 18 mit den Leitungen 14 und 16 durch Löten kontaktiert, wonach die Anschlußbaugruppe 18 in den zylindrischen Endabschnitt 26 eingeschoben wird und in dieser Einbaulage durch Aufschrauben der Überwurfmutter 26 gesichert wird. Damit ist die Herstellung des Druckmeßumformers einschließlich der Funktionsprüfung und Justage beendet.

Dadurch, daß die Verbindung zwischend der Anschlußbaugruppe 18 und dem zylindrischen Endabschnitt 26 des Gehäuses die Rastvorrichtung aufweist, die bei dem beschriebenen Ausführungsbeispiel durch die Vorsprünge 34 des Rastringes 32 aus Kunststoff und die Ausnehmungen 36 gebildet ist, ist die Herstellung des beschriebenen Druckmeßumformers vereinfacht. Zudem zeichnet sich der beschriebene Druckmeßumformer durch die beschriebene, einfach herzustellende und besonders zweckmäßige Belüftungsvorrichtung aus.

Wenn von einem bestimmten Druckmeßumformer-Typ verschiedene Versionen hergestellt werden sollen, die sich durch die Bauart der Anschlußbaugruppe unterscheiden, werden mehrere verschiedene Anschlußbaugruppen gefertigt und bereitgehalten. In Fig. 3 sind zusätzlich zu der Anschlußbaugruppe 18 davon verschiedene Anschlußbaugruppen 64 und 66 gezeigt. Die Ringflansche 44 der verschiedenen Anschlußbaugruppen 18, 64 und 66 sind identisch geformt. Die Anschlußbaugruppe 64 ist ebenso wie die Anschlußbaugruppe 18 eine Anschlußbaugruppe mit einem Gerätestecker. Die Anschlußbaugruppe 66 ist eine als Kabeldurchführung ausgebildete Anschlußbaugruppe. Bei den gezeigten Anschlußbaugruppen 18, 64 und 66 handelt es sich lediglich um Beispiele. Die Anzahl verschiedener Anschlußbaugruppen kann größer als drei sein. Während der vorstehend anhand der Fig. 3 erläuterten Herstellung des Druckmeßumformers wird eine der verschiedenen Anschlußbaugruppen 18, 64 und 66 ausgewählt und wird die gewählte Anschlußbaugruppe in der Weise mit der Umformereinheit 62 verbunden, wie dies vorstehend für die Anschlußbaugruppe 18 beschrieben wurde. Wie sich aus der vorstehenden Beschreibung und Fig. 3 ergibt, ist bei einem bestimmten Druckmeßumformer-Typ das Gehäuse 22 unabhängig von der Bauart der gewählten Anschlußbaugruppe 18, 64 oder 66 stets gleich geformt. Dies erlaubt es, die Umformereinheit 62 zu fertigen, also insbesondere das Gehäuse 22 mit dem Druckanschluß 2 zu verschweißen, bevor feststeht, welche der Anschlußbaugruppen 18, 64 und 66 zur Anwendung kommt. Die Verbindbarkeit ein und desselben Gehäuses 22 mit jeder der Anschlußbaugruppen 18, 64 und 66 ist durch die Gestaltung von deren Adapterring 42 gewährleistet, nämlich dadurch, daß zumindest die Ringflansche 44 der verschiedenen Anschlußbaugruppen 18, 64 und 66 identisch geformt sind.

Um kurze Lieferfristen trotz der Wahlmöglichkeit zwischen mehreren verschiedenen Anschlußbaugruppen zu gewährleisten, reicht es aufgrund der beschriebenen Ausbildung des Druckmeßumformers und des beschriebenen Verfahrens aus, lediglich die verschiedenen Anschlußbaugruppen 18, 64 und 88 einerseits und die geprüfte und justierte Umformereinheit 62 auf Lager zu halten, die mit jeder der Anschlußbaugruppen 18, 64 und 66 verbindbar ist. Nach Eingang eines Kundenauftrags kann daher die vom Kunden gewünschte Anschlußbaugruppe auf die beschriebene schnelle und einfache Weise mit der Umformereinheit 62 zum fertigen und justierten Druckmeßumformer verbunden werden. Es ist somit eine günstige Kombination aus kurzer Lieferzeit und dennoch vergleichsweise geringer Lagerhaltung erreicht. Zudem erfordert die Endmontage außer allenfalls einem Lötwerkzeug keine Werkzeuge, so daß sie gegebenenfalls sogar außerhalb des Herstellerwerks, also beispielsweise in einem Auslieferungslager vorgenommen werden kann.

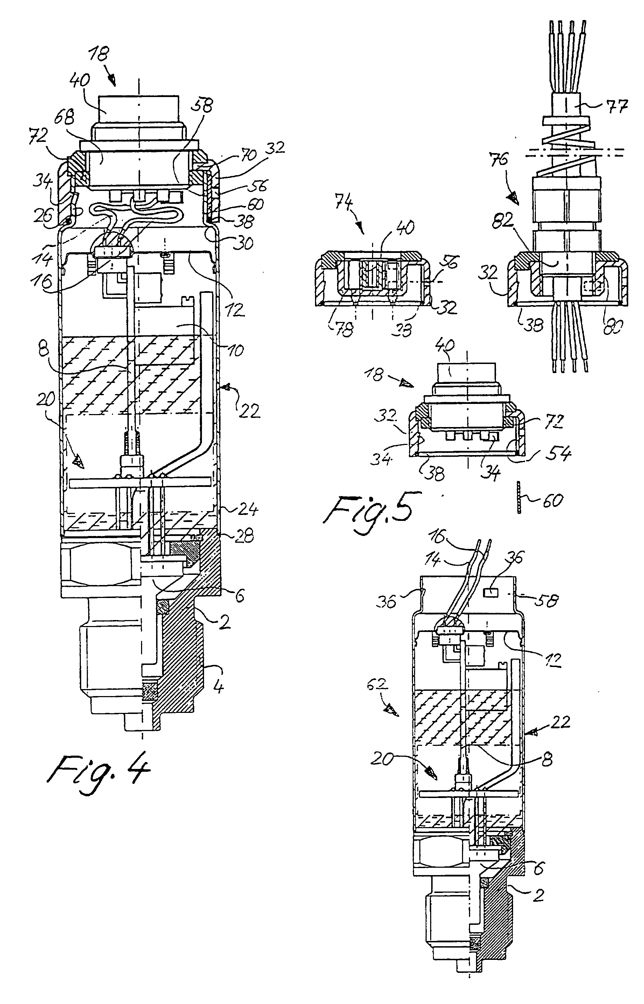

Diejenigen Elemente der in Fig. 4 gezeigten zweiten Ausführungsform des Druckmeßumformers, die mit Elementen der ersten Ausführungsform gemäß den Figuren 1 und 2 übereinstimmen, sind in Fig. 4 mit den gleichen Bezugszeichen wie in den Figuren 1 und 2 bezeichnet. Diese Elemente werden im Zusammenhang mit Fig. 4 nicht erneut erläutert; Vielmehr gilt die Erläuterung anhand der Figuren 1 und 2 auch für die Ausführungsform gemäß Fig. 4.

Wie Fig. 4 erkennen läßt, ist die Bauart des Gerätesteckers 40 der Anschlußbaugruppe 18 verschieden von der Bauart des in Fig. 1 gezeigten Gerätesteckers 40.

Der Druckmeßumformer gemäß Fig. 4 unterscheidet sich von dem Druckmeßumformer gemäß den Figuren 1 und 2 dadurch, daß bei der zweiten Ausführungsform der Rastring 32 und die Anschlußbaugruppe 18 miteinander integriert sind, d. h. zu einem Untersystem verbunden sind. Der Gerätestecker 40 der Anschlußbaugruppe 18 weist einen Sockel 68 auf, der mit einem Außengewinde versehen ist. An dem aus einem Kunststoff bestehenden Rastring 32 ist ein innerer Ringflansch 70 angeformt, der mittels einer auf das Außengewinde des Sockels 68 geschraubten Mutter 72 am Gerätestekker 40 befestigt ist. Alternativ kann der Rastring 32 auch direkt auf den Sockel 68 geschraubt oder mit diesem verklebt sein.

Der Rastring 32 der zweiten Ausführungsform weist kein Außengewinde auf. Die bei der ersten Ausführungsform vorhandene Überwurfmutter 46 ist bei der zweiten Ausführungsform entfallen. Durch den Wegfall der Überwurfmutter ist die Herstellung der zweiten Ausführungsform noch weiter vereinfacht.

Die Belüftungsvorrichtung ist bei dem Ausführungsbeispiel wiederum durch die Öffnung 56, die Membran 60 und die Öffnung 58 gebildet, umfaßt jedoch nicht noch zusätzlich Gewindegänge, wie sie bei der Ausführungsform gemäß Fig. 1 vorhanden sind.

Die Herstellung des Druckumformers gemäß der zweiten Ausführungsform wird im folgenden anhand der Fig. 5 erläutert. Die Umformereinheit 62 wird in gleicher Weise gefertigt, wie dies im Zusammenhang mit Fig. 3 vorstehend erläutert ist. Nachdem die Umformereinheit 62 gefertigt, geprüft und justiert worden ist, wird das aus der Anschlußbaugruppe 18 und dem Rastring 32 bestehende Untersystem mit der Umformereinheit 62 dadurch verbunden, daß zunächst die Leitungen 14 und 16 mit dem Gerätestecker 40 kontaktiert werden, bevor dann der Rastring 32 unter Zwischenfügung des Dichtringes 38 und der Membran 60 auf den zylindrischen Endabschnitt 24 gesteckt und mit diesem verrastet wird. Damit ist die Herstellung des Druckmeßumformers einschließlich der Funktionsprüfung und der Justage beendet.

Wie die erste Ausführungsform bietet auch die zweite Ausführungsform die Möglichkeit, zwischen verschiedenen Anschlußbaugruppen zu wählen. Statt der Anschlußbaugruppe 18 kann alternativ eine der beiden zusätzlich in Fig. 5 gezeigten Anschlußbaugruppen 74 und 76 mit der Umformereinheit 62 verbunden werden. Die Anschlußbaugruppe 74 weist einen Gerätestecker 40 auf, zu dem ein Steckergehäuse 78 gehört, das einstückig mit dem Rastring 32 ausgebildet ist. Die Anschlußbaugruppe 76 ist als Kabeldurchführung für ein Signalkabel 77 ausgebildet. Bei der Anschlußbaugruppe 76 ist der Rastring 32 einstückig mit einem Gewindering 80 ausgebildet, der auf eine Hülse 82 der Kabeldurchführung geschraubt ist. Wiederum handelt es sich bei den gezeigten Anschlußbaugruppen 18, 74 und 76 lediglich um Beispiele. Die Anzahl verschiedener Untersysteme aus dem Rastring 32 und einer Anschlußbaugruppe kann größer als drei sein.

Auch bei der zweiten Ausführungsform ist für einen bestimmten Druckmeßumformer-Typ unabhängig von der Art der gewählten Anschlußbaugruppe 18, 74 oder 76 das Gehäuse 22 gleich geformt. Die Verbindbarkeit des Gehäuses 22 mit jeder der Anschlußbaugruppen 18, 74 und 76 ist dadurch gewährleistet, daß die Rastringe 32 der verschiedenen Anschlußbaugruppen in demjenigen Bereich, der in Eingriff mit dem zylindrischen Endabschnitt 26 steht, untereinander identisch geformt sind.

Die Erfindung ist nicht auf die vorstehend beschriebenen Ausführungsformen beschränkt. Vielmehr sind zahlreiche weitere Ausführungsformen im Rahmen der in der vorstehenden Einleitung erläuterten und in den Ansprüchen definierten Erfindung möglich.

## Patentansprüche

1. Verfahren zur Herstellung eines Druckmeßumformers mit einem Druckanschluß (2) zum Anschließen des Druckmeßumformers an ein einen Meßstoff führendes System, einem rohrförmigen Gehäuse (22) mit einem ersten und einem zweiten Endabschnitt (24, 26), das an seinem ersten Endabschnitt (24) mit dem Druckanschluß (2) fest verbunden ist, einem Drucksensor (6), der am Druckanschluß (2) befestigt ist, einer im Gehäuse (22) angeordneten Schaltungsanordnung (8) zur Speisung des Drucksensors (6) mit elektrischer Hilfsenergie und zur Verarbeitung eines elektrischen Ausgangssignals des Drucksensors und mit einer elektrisch mit der Schaltungsanordnung (8) verbundenen Anschlußbaugruppe (18, 64, 66, 74, 76), über die das elektrische Ausgangssignal des Druckmeßumformers abgegeben und dem Druckmeßumformer die elektrische Hilfsenergie zugeführt wird,
wobei die Anschlußbaugruppe (18, 64, 66, 74, 76) mit dem zweiten, vom Druckanschluß (2) abgewandten Endabschnitt (26) des Gehäuses (22) fest verbunden ist,
wobei das Verfahren die Schritte umfaßt,
daß der Druckanschluß (2), der Drucksensor (6) und die Schaltungsanordnung (8) mechanisch und elektrisch zu einem Untersystem (20) verbunden werden, daß das Gehäuse (22) am Druckanschluß (2) des Untersystems befestigt wird und daß die Anschlußbaugruppe (18, 64, 66, 74, 76) mechanisch mit dem Gehäuse (22) verbunden wird und elektrisch mit der Schaltungsanordnung (8) kontaktiert wird, wobei
das Gehäuse (22) am Druckanschluß (2) des Untersystems (20) befestigt wird, bevor die Anschlußbaugruppe (18, 64, 66, 74, 76) elektrisch mit der Schaltungsanordnung (8) kontaktiert und mechanisch mit dem Gehäuse (22) verbunden wird,
**dadurch gekennzeichnet,**
**daß** mehrere verschiedene Anschlußbaugruppen (18, 64, 66, 74, 76) gefertigt werden und daß eine dieser verschiedenen Anschlußbaugruppen zur Verbindung mit dem Gehäuse (22) ausgewählt wird, wobei
das Gehäuse (22) derart ausgebildet wird, daß es mit jeder der verschiedenen Anschlußbaugruppen (18, 64, 66, 74, 76) verbindbar ist.

2. Verfahren nach Anspruch 1, wobei sowohl das Gehäuse (22) als auch der Druckanschluß (2) aus Metall bestehen, **dadurch gekennzeichnet, daß** das Gehäuse (22) am Druckanschluß (2) durch Schweißen befestigt wird.

3. Verfahren nach Anspruch 1 oder 2, **dadurch gekennzeichnet, daß** die ansgewählte Anschlußbaugruppe (18, 64, 66, 74, 76) mit dem Gehäuse (22) über eine Rastvorrichtung (34, 36) verbunden wird.

4. Verfahren nach einem der Ansprüche 1 bis 3, **dadurch gekennzeichnet, daß** nach dem Befestigen des Gehäuses (22) am Druckanschluß (2) und vor dem Verbinden der ausgewählten Anschlußbaugruppe (18, 64, 66, 74, 76) mit dem Gehäuse (22) eine Justage und eine Funktionsprüfung des Untersystems (20) durchgeführt werden.

5. Druckmeßumformer mit einem Druckanschluß (2) zum Anschließen des Druckmeßumformers an ein einen Meßstoff führendes System, einem rohrförmigen Gehäuse (22) mit einem ersten Endabschnitt (24) und einem zylindrischen, zweiten Endabschnitt (26), das an seinem ersten Endabschnitt (24) mit dem Druckanschluß (2) fest verbunden ist, einem Drucksensor (6), der am Druckanschluß (2) befestigt ist, einer im Gehäuse (22) angeordneten Schaltungsanordnung (8) zur Speisung des Drucksensors (6) mit elektrischer Hilfsenergie und zur Verarbeitung eines elektrischen Ausgangssignals des Drucksensors und mit einer elektrisch mit der Schaltungsanordnung (8) verbundenen Anschlußbaugruppe (18, 64, 66), über die das elektrische Ausgangssignal des Druckmeßumformers abgebbar und dem Druckmeßumformer die elektrische Hilfsenergie zuführbar ist, wobei die Anschlußbaugruppe (18, 64, 66) mit dem zweiten, vom Druckanschluß (2) abgewandten Endabschnitt (26) und des Gehäuses (22) fest verbunden ist, **dadurch gekennzeichnet, daß** ein auf der Außenseite des zylindrischen, zweiten Endabschnitts (26) angeordneter Rastring (32) mit dem zweiten Endabschnitt (26) mittels einer Rastvorrichtung (34, 38) in Eingriff steht, die zumindest einen Vorsprung (34), der entweder am Rastring (32) oder am zylindrischen Endabschnitt (26) ausgebildet ist, und zumindest eine Ausnehmung (36) aufweist, die jeweils am anderen dieser Teile (zylindrischer Endabschnitt (26) oder Rastring (32)) ausgebildet ist und in die der Vorsprung (34) eingerastet ist, daß der Rastring (32) auf seiner Außenseite mit einem Außengewinde (48) versehen ist, daß die Anschlußbaugruppe (18, 64, 66) einen Ringflansch (44) aufweist und daß auf das Außengewinde (48) des Rastringes (32) eine Überwurfmutter (46) geschraubt ist, die den Ringflansch (44) am Rastring (32) festhält.

6. Druckmeßumformer nach Anspruch 5, **dadurch gekennzeichnet, daß** die Anzahl der Vorsprünge (34) und zugeordneten Ausnehmungen (36) jeweils drei beträgt und daß diese Vorsprünge und Ausnehmungen gleichmäßig über den Umfang des zylindrischen Endabschnitts (26) verteilt sind.

7. Druckmeßumformer nach Anspruch 5 oder 6, **dadurch gekennzeichnet, daß** die Rastvorrichtung als Bajonettverbindungsvorrichtung ausgebildet ist.

8. Druckmeßumformer nach einem der Ansprüche 5 bis 7, **dadurch gekennzeichnet, daß** die Anschlußbaugruppe (18, 64, 66) einen Adapterring (42) aufweist, an dem der Ringflansch (44) angeformt ist.

9. Druckmeßumformer nach einem der Ansprüche 5 bis 8, **dadurch gekennzeichnet, daß** der Rastring (32) aus einem Kunststoff besteht.

10. Druckmeßumformer nach einem der Ansprüche 5 bis 9, **dadurch gekennzeichnet, daß** der zylindrische Endabschnitt (26) des Gehäuses eine Schulter (30) aufweist, auf der ein zwischen dem Rastring (32) und dem Gehäuse (22) dichtender Dichtring (38) sitzt.

11. Druckmeßumformer nach einem der Ansprüche 5 bis 10, **dadurch gekennzeichnet, daß** der Rastring (32) auf seiner dem zylindrischen Endabschnitt (26) zugewandten Seite und/oder der zylindrische Endabschnitt (26) auf seiner dem Rastring (32) zugewandten Seite eine Ausnehmung (54) aufweist, daß im Bereich der Ausnehmung (54) sowohl der zylindrische Endabschnitt (26) als auch der Rastring (32) mit einer Öffnung (56, 58) versehen sind und daß in der Ausnehmung (54) eine Membran (60) aus einem flüssigkeitsundurchlässigen und gasdurchlässigen Werkstoff angeordnet ist.

## Claims

1. A method for manufacturing a pressure transducer comprising a pressure connection (2) for connecting the pressure transducer to a system containing a measured medium, a tube-shaped housing (22) having a first and a second end section (24, 26), which is securely connected at its first end section (24) to said pressure connection (2), a pressure sensor (6) that is affixed at said pressure connection (2), a circuit arrangement (8) arranged in said housing (22) for supplying said pressure sensor (6) with electrical auxiliary energy and for processing an electrical output signal from said pressure sensor and having an interface module (18, 64, 66, 74, 76) that is electrically connected to said circuit arrangement (8) and through which said electrical output signal from the pressure transducer is provided and electrical auxiliary energy is supplied to the pressure transducer, said interface module (18, 64, 66, 74, 76) being securely connected to said second end section (26) of said housing (22), which faces away from said pressure connection (2),
the method encompassing the steps that said pressure connection (2), said pressure sensor (6), and said circuit arrangement (8) are mechanically and electrically connected to form a sub-system (20), that said housing (22) is attached to said pressure connection (2) of said sub-system, and that said interface module (18, 64, 66, 74, 76) is connected mechanically to said housing (22) and is placed in electrical contact with said circuit arrangement (8), wherein said housing (22) is attached to said pressure connection (2) of said sub-system (20) prior to said interface module (18, 64, 66, 74, 76) being placed in electrical contact with said circuit arrangement (8) and being mechanically connected to said housing (22),
**characterized in that**
a plurality of different interface modules (18, 64, 66, 74, 76) are produced and **in that** one of these different interface modules is selected to be connected with said housing (22), wherein said housing (22) is being designed such that it can be connected to each of said different interface modules (18, 64, 66, 74, 76).

2. A method in accordance with Claim 1, wherein both said housing (22) and also said pressure connection (2) comprise metal, **characterized in that** said housing (22) is affixed to said pressure connection (2) by means of welding.

3. A method in accordance with Claim 1 or 2, **characterized in that** said selected interface module (18, 64, 66, 74, 76) is connected to said housing (22) via a locking apparatus (34, 36).

4. A method in accordance with any of Claims 1 through 3, **characterized in that** said sub-system (20) is subjected to functional testing and is adjusted after attaching said housing (22) to said pressure connection (2) and prior to connecting said selected interface module (18, 64, 66, 74, 76) to said housing (22).

5. A pressure transducer comprising a pressure connection (2) for connecting the pressure transducer to a system containing a measured medium, a tube-shaped housing (22) having a first end section (24) and a cylindrical second end section (26) that is securely connected at its first end section (24) to said pressure connection (2), a pressure sensor (6) that is attached at said pressure connection (2), a circuit arrangement (8) arranged in said housing (22) for supplying said pressure sensor (6) with electrical auxiliary energy and for processing an electrical output signal from said pressure sensor, and having an interface module (18, 64, 66) that is electrically connected to said circuit arrangement (8) and through which said electrical output signal from the pressure transducer is provided and electrical auxiliary energy is supplied to the pressure transducer, said interface module (18, 64, 66) being securely connected to said second end section (26) of said housing (22), which faces away from said pressure connection (2), **characterized in that** a locking ring (32) disposed on the outside of said cylindrical second end section (26) is engaged with said second end section (26) by means of a locking apparatus (34, 38) having at least one projection (34) formed either on said locking ring (32) or on said cylindrical end section (26) and at least one seat (36) which is respectively formed on the other of these parts (cylindrical end section (26) or locking ring (32)) and in which said projection (34) is locked, that said locking ring (32) is provided with an external thread (48) on its outside, that said interface module (18, 64, 66) comprises an annular flange (44), and that a union nut (46) is screwed onto said external thread (48) of said locking ring (32), said union nut fastening said annular flange (44) to said locking ring (32).

6. A pressure transducer in accordance with Claim 5, **characterized in that** there are three each of said projections (34) and of said associated seats (36) and **in that** said projections and seats are distributed evenly around the circumference of said cylindrical end section (26).

7. A pressure transducer in accordance with Claim 5 or 6, **characterized in that** said locking apparatus is a bayonet coupling apparatus.

8. A pressure transducer in accordance with any of Claims 5 through 7, **characterized in that** said interface module (18, 64, 66) comprises an adapter ring (42) on which said annular flange (44) is formed.

9. A pressure transducer in accordance with any of Claims 5 through 8, **characterized in that** said locking ring (32) consists of a plastic.

10. A pressure transducer in accordance with any of Claims 5 through 9, **characterized in that** said cylindrical end section (26) of said housing comprises a shoulder (30) upon which a sealing ring (38) sits between said locking ring (32) and said housing (22).

11. A pressure transducer in accordance with any of Claims 5 through 10, **characterized in that** said locking ring (32) comprises a recess (54) on its side that faces said cylindrical end section (26) and/or said cylindrical end section (26) comprises a recess (54) on its side that faces said locking ring (32), **in that** in the region of said recess (54) both said cylindrical end section (26) and said locking ring (32) are provided with an opening (56, 58), and **in that** a membrane (60) made of a liquid-impermeable and gas-permeable material is arranged in said recess (54).

## Revendications

1. Procédé de fabrication d'un transducteur de pression comportant un raccord de pression (2) pour raccorder le transducteur de pression à un système transportant une substance à mesurer, un boîtier (22) de forme tubulaire avec une première et une deuxième portions terminales (24, 26) qui est relié fixement au raccord de pression (2), dans sa première portion terminale (24), un capteur de pression (6) qui est fixé au raccord de pression (2), un circuit (8) disposé dans le boîtier (22) pour alimenter le capteur de pression (6) en énergie auxiliaire électrique et pour traiter un signal de sortie électrique du capteur de pression, et comportant un groupe de raccordement (18, 64, 66, 74, 76) qui est relié électriquement au circuit (8) et par lequel le signal de sortie électrique du transducteur de pression est délivré et l'énergie auxiliaire électrique est acheminée vers le transducteur de pression, le groupe de raccordement (18, 64, 66, 74, 76) étant relié fixement à la deuxième portion terminale (26) du boîtier (22) tournée à l'opposé du raccord de pression (2), le procédé comportant les étapes suivantes : le raccord de pression (2), le capteur de pression (6) et le circuit (8) sont reliés mécaniquement et électriquement à un sous-système (20), le boîtier (22) est fixé au raccord de pression (2) du système et le groupe de raccordement (18, 64, 66, 74, 76) est relié mécaniquement au boîtier (22) et est mis en contact électrique avec le circuit (8), le boîtier (22) étant fixé au raccord de pression (2) du sous-système (20), avant que le groupe de raccordement (18, 64, 66, 74, 76) ne soit mis en contact électrique avec le circuit (8) et relié mécaniquement au boîtier (22), **caractérisé en ce que** plusieurs groupes de raccordement (18, 64, 66, 74, 76) différents sont fabriqués et **en ce que** l'un de ces différents groupes de raccordement est sélectionné pour la liaison avec le boîtier (22), le boîtier (22) étant tel qu'il peut être relié à chacun des différents groupes de raccordement (18, 64, 66, 74, 76).

2. Procédé selon la revendication 1, dans lequel le boîtier (22) ainsi que le raccord de pression (2) sont en métal, **caractérisé en ce que** le boîtier (22) est fixé par soudage au raccord de pression (2).

3. Procédé selon la revendication 1 ou 2, **caractérisé en ce que** le groupe de raccordement (18, 64, 66, 74, 76) sélectionné est relié au boîtier (22) par l'intermédiaire d'un dispositif à encliquetage (34, 36).

4. Procédé selon l'une des revendications 1 à 3, **caractérisé en ce qu'**après fixation du boîtier (22) ou raccord de pression (2) et avant la liaison du groupe de raccordement (18, 64, 66, 74, 76) sélectionné au boîtier (22), il est procédé à un ajustage et à une vérification du fonctionnement du sous-système (20).

5. Transducteur de pression comportant un raccord de pression (2) pour raccorder le transducteur de pression à un système transportant une substance à mesurer, un boîtier (22) de forme tubulaire avec une première et une deuxième portion terminale (24, 26) qui est relié fixement au raccord de pression (2), dans sa première portion terminale (24), un capteur de pression (6) qui est fixé au raccord de pression (2), un circuit (8) disposé dans le boîtier (22) pour alimenter le capteur de pression (6) en énergie auxiliaire électrique et pour traiter un signal de sortie électrique du capteur de pression, et comportant un groupe de raccordement (18, 64, 66, 74, 76) qui est relié électriquement au circuit (8) et par lequel le signal de sortie électrique du transducteur de pression peut être délivré et l'énergie auxiliaire électrique peut être acheminée vers le transducteur de pression, le groupe de raccordement (18, 64, 66, 74, 76) étant relié fixement à la deuxième portion terminale (26) du boîtier (22) tournée à l'opposé du raccord de pression (2), **caractérisé en ce qu'**une bague d'encliquetage (32), disposée sur le côté extérieur de la deuxième portion terminale (26) cylindrique est en engagement avec la deuxième portion terminale (26), au moyen d'un dispositif à encliquetage (34, 38), laquelle présente au moins une saillie (34) qui est formée soit sur la bague d'encliquetage (32), soit sur la portion terminale cylindrique (26), ainsi qu'au moins un évidement (36) qui est formé respectivement sur l'autre de ces parties (portion terminale cylindrique (26) ou bague d'encliquetage (32)), et dans lequel est accrochée la saillie (34), **en ce que** la bague d'encliquetage (32) est pourvue, sur son côté extérieur, d'un filetage (48), **en ce que** le groupe de raccordement (18, 64, 66) présente une bride annulaire (44) et **en ce que** sur le filetage (48) de la bague d'encliquetage (32) est vissé un écrou-raccord (46) qui fixe la bride annulaire (44) sur la bague d'encliquetage (32).

6. Transducteur de pression selon la revendication 5, **caractérisé en ce que** le nombre de saillies (34) et d'évidements (36) associés est de trois et **en ce que** ces saillies et évidements sont uniformément répartis sur le pourtour de la portion terminale cylindrique (26).

7. Transducteur de pression selon la revendication 5 ou 6, **caractérisé en ce que** le dispositif d'encliquetage est conformé en dispositif de liaison à baïonnette.

8. Transducteur de pression selon l'une des revendications 5 à 7, **caractérisé en ce que** le groupe de raccordement (18, 64, 66) comporte une bague d'adaptation (42) sur laquelle est formée la bride annulaire (44).

9. Transducteur de pression selon l'une des revendications 5 à 8, **caractérisé en ce que** la bague d'encliquetage (32) est constituée d'une matière plastique.

10. Transducteur de pression selon l'une des revendications 5 à 9, **caractérisé en ce que** la portion terminale cylindrique (26) du boîtier comporte un épaulement (30) sur lequel repose une bague d'étanchéité (38) assurant l'étanchéité entre la bague d'encliquetage (32) et le boîtier (22).

11. Transducteur de pression selon l'une des revendications 5 à 10, **caractérisé en ce que** la bague d'encliquetage (32) présente un évidement (54) sur son côté tourné vers la portion terminale cylindrique (26) et/ou la portion terminale cylindrique (26) présente un évidement sur son côté tourné vers la bague d'encliquetage (32), **en ce que** dans la zone de l'évidement (54), la portion terminale cylindrique (26) ainsi que la bague d'encliquetage (32) sont pourvues d'une ouverture (56, 58) et **en ce que** dans l'évidement (54) est disposée une membrane (60) constituée d'une matière imperméable aux liquides et perméable aux gaz.
